Europäisches Patentamt

European Patent Office

Office européen des brevets

(11) Veröffentlichungsnummer: **0 316 728 B1**

## (12) EUROPÄISCHE PATENTSCHRIFT

(45) Veröffentlichungstag der Patentschrift: **19.08.92**

(21) Anmeldenummer: **88118623.3**

(22) Anmeldetag: **09.11.88**

(51) Int. Cl.⁵: **A01B 23/02**, A01B 19/06

(54) **Rüttelegge mit federnden Halterungen für die Zinken.**

(30) Priorität: **19.11.87 DE 3739109**

(43) Veröffentlichungstag der Anmeldung:
**24.05.89 Patentblatt 89/21**

(45) Bekanntmachung des Hinweises auf die
Patenterteilung:
**19.08.92 Patentblatt 92/34**

(84) Benannte Vertragsstaaten:
**AT CH DE FR GB IT LI NL**

(56) Entgegenhaltungen:
**EP-A- 0 142 750**
**DE-U- 8 710 529**
**GB-A- 2 057 232**

(73) Patentinhaber: **Amazonen-Werke H. Dreyer
GmbH & Co. KG
Am Amazonenwerk 9-13
W-4507 Hasbergen-Gaste(DE)**

(72) Erfinder: **Higgen, Reinhard
Gartenstrasse 1
W-2872 Hude 1(DE)**

## Beschreibung

Die Erfindung betrifft eine Rüttelegge gemäß des Oberbegriffes des Patentanspruches 1.

Das deutsche Gebrauchsmuster 87 10 529 zeigt eine Rüttelegge gemäß des Oberbegriffes des Patentanspruches 1. Zinken bei dieser Rüttelegge sind mittels dreier Schrauben an dem Eggenbalken angeschraubt. Hierbei ist das Befestigungsteil mittels dreier Schrauben fest an dem geraden horizontalen unteren Teil des Eggenbalkens befestigt. Darüberhinaus ist der Zinken der Rüttelegge als Blattfeder ausgebildet und somit elastisch ausweichbar ausgeführt. Die Befestigung des Zinkens an dem Eggenbalken ist aufgrund der Anordnung der Schraubenbefestigung äußerst schwierig.

Die britische Offenlegungsschrift 20 57 232 zeigt eine herkömmliche Ackeregge. Die Zinken dieser Ackeregge weisen ein Bearbeitungs- und Befestigungsteil auf. Das Befestigungsteil dieser Zinken ist zwischen den Quer- und Längsstreben der Ackeregge mittels eines Nietes festeingeklemmt angeordnet.

Durch die DE-OS 19 64 571 ist eine weitere Rüttelegge bekannt. Hierbei sind an jedem der zwei hintereinander angeordneten Tragbalken mittels Schrauben spiralig gebogene Blattfedern festgespannt, die an ihrem freien Ende je einen abgebogenen Endabschnitt haben, der in einem stumpfen Winkel zu einem waagerechten Abschnitt steht. Die Blattfedern sind jeweils paarweise oder zu dritt mit Hilfe einer Stange miteinander verbunden, welche ein dem freien Enden der Blattfeder entsprechendes Winkelprofil aufweist. Der Endabschnitt ist mit Hilfe einer Schraube gegen den einen Flansch der Stange gespannt. Der andere Flansch der Stange liegt an dem Abschnitt an, und durch ihn und den Abschnitt der Blattfeder erstreckt sich ein als Gewindezapfen ausgebildeter Teil einer Eggenzinke. Durch das Verbinden einzelner Zinken mittels einer Stange soll mit einfachen Mitteln eine wesentliche Erhöhung des Bodenlockerungseffektes erreicht werden, wobei sämtliche Vorteile der federnden Halterungen und der seitlichen Bewegungen der Eggenzinken beibehalten werden sollen.

Die Art und Weise der Befestigung der federnden Halterungen für die Eggenzinken an den Tragbalken stellt sich durch die vielen einzelnen Bauteile und ihrer vier Schraubverbindungen pro Eggenzinken hinsichtlich der Montage als äußerst aufwendig und teuer dar.

Der Erfindung liegt daher die Aufgabe zugrunde, die Befestigung von Zinken an Rütteleggenbalken einer Rüttelegge, insbesondere für die Montage der Zinken, wesentlich einfacher zu gestalten.

Diese Aufgabe wird in erfindungsgemäßer Weise durch die keinnzeichnenden Maßnahmen des Anspruches 1 gelöst. Infolge dieser Maßnahmen wird eine einfache Befestigung der Zinken an den Tragbalken von Rütteleggen geschaffen, wobei die Abwinkelung des Befestigungsteiles des Zinkens gegenüber dem Arbeitsteil nach vorn in etwa der Kontur der Rütteleggenbalken, an dem die Zinken direkt befestigt werden, entspricht. Durch die Abstützung des einen Teiles des Befestigungselementes auf den Eggenbalken wird eine federnde Zinkenbefestigung geschaffen, da bei einem Auftreffen des Zinkens auf ein im Boden festsitzendes Hindernis, durch das Zusammenwirken des Zinkens und des Eggenbalkens, eine Verformung des U-förmigen Rütteleggenbalkens im Bereich der Befestigungsstelle des jeweiligen Zinkens erfolgt und der Zinken so vor Beschädigungen geschützt wird, indem er dem Hindernis ausweichen kann.

Durch die Abwinkelung des Befestigungsteiles des Zinkens gegenüber dem Arbeitsteil nach vorn und die Befestigung der Zinken mit den Befestigungselementen ausschließlich nur an dem schräg nach hinten-unten abgebogenen Teil des Eggenbalkens, wird eine besonders montagefreundliche Zinkenbefestigung geschaffen. Mittels Schraubverbindungen lassen sich die Befestigungselemente für jeden Zinken mit dem Eggenbalken in einfacher Weise verbinden, wobei die Schraubverbindungen derart leicht zugänglich sind, daß sie beispielsweise mit einem Schlagschrauber andrehbar sind.

Eine weitere federnde Zinkenbefestigung an den Eggenbalken einer Rüttelegge, wobei die Eggenbalken elastisch verformbar sind, wird in erfindungsgemäßer Weise dadurch geschaffen, daß der über die Befestigungselemente hinausragende Arbeitsteil in Ruhestellung des Zinkens an dem Eggenbalken anliegt. Auch diese Art der Zinkenbefestigung erlaubt ein Ausweichen der Zinken beim Auftreffen auf ein Hindernis, in dem durch die auf den Zinken wirkenden äußeren Kräfte eine Auslenkung des Zinkens hervorgerufen wird, wobei der Eggenbalken im Bereich des Zinkens kurzzeitig verformt wird.

Weiterhin ist in erfindungsgemäßer Weise vorgesehen, daß der über die Befestigungselemente hinausragende Abstützteil in Ruhestellung des Zinkens einen kleinen Abstand zu dem Eggenbalken aufweist. Hierdurch wird eine "Stufenfederung" des Zinkens geschaffen, indem der Zinken zunächst beim Auftreffen auf ein Hindernis soweit ausweicht, bis er sich an dem Eggenbalken abstützt. Eine weitere Auslenkung des Zinkens führt zu einer elastischen Verformung des federnden Eggenbalkens.

In einer besonders bevorzugten Ausführungsform ist erfindungsgemäß vorgesehen, daß die Zinken im Übergang von Arbeitsteil zum Befestigungsteil eine Durchprägung aufweisen. Hierdurch ergeben sich stabile, einfach herzustellende Zinken, wobei die Zinken aus Flachstahl geschmiedet sind.

Eine besonders gute Arbeitsqualität des von den Zinken bearbeiteten Bodens wird dadurch erreicht, daß der Arbeitsteil des Zinkens sich nach unten verjüngt und im Querschnitt eine Winkelform mit einer Hohlkehle auf der Vorderseite aufweist.

Weitere Einzelheiten der Erfindung sind der Beispielsbeschreibung und den Zeichnungen zu entnehmen. Hierbei zeigt

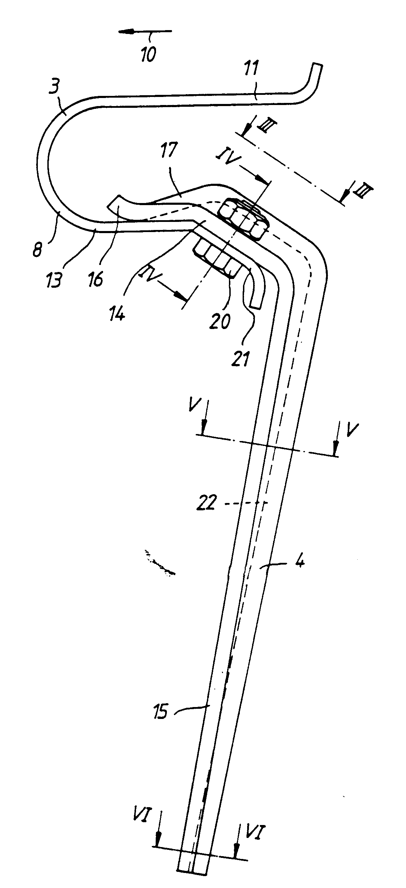

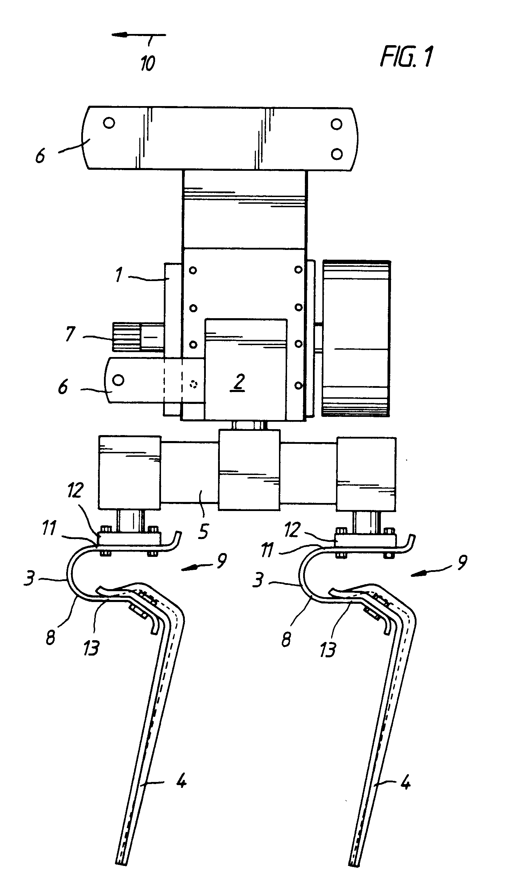

Fig. 1 eine in erfindungsgemäßer Weise ausgerüstete Rüttelegge in der Seitenansicht,

Fig. 2 ein U-förmig ausgebildeter Rütteleggenbalken mit dem erfindungsgemäßen Zinken in der Seitenansicht und in vergrößertem Maßstab,

Fig. 3 Teilansicht des erfindungsgemäßen Befestigungsteiles des Eggenzinkens an dem Eggenbalken in der Ansicht III - III,

Fig. 4 Teilansicht des erfindungsgemäßen Eggenzinkens in der Ansicht IV - IV,

Fig. 5 Teilansicht des erfindungsgemäßen Eggenzinkens der Ansicht V - V,

Fig. 6 den erfindungsgemäßen Eggenzinken in der Ansicht VI - VI,

Fig. 7 einen weiteren in erfindungsgemäßer Weise ausgerüsteten Eggenzinken, wobei der über die Befestigungselemente hinausragende Abstützteil in Ruhestellung des Zinkens einen kleinen Abstand zu dem Eggenbalken aufweist,

Fig. 8 ein andersartig ausgebildeter Eggenbalken, wobei der über die Befestigungselemente hinausragende Arbeitsteil in Ruhestellung des Zinkens an dem Eggenbalken anliegt und

Fig. 9 die erfindungsgemäße Befestigung des Eggenzinkens an einem andersartig ausgebildeten Eggenbalken.

Die Rüttelegge besteht im wesentlichen aus der Getriebeeinheit 1, dem an der Getriebeeinheit 1 festgeschraubten Tragrahmen 2 und den beiden hintereinander angeordneten Eggenbalken 3, die mit den Bodenbearbeitungszinken 4 besetzt sind. Die Eggenbalken 3 sind mit Hilfe der Schwingen 5 an dem Tragrahmen 2 angeordnet. Die Rüttelegge wird mit Hilfe der Dreipunktkupplungselemente 6 an den Dreipunktkraftheber einer landwirtschaftlichen Zug- oder Arbeitsmaschine gekuppelt. Hinter der Rüttelegge läßt sich in bekannter und daher nicht näher dargestellter Weise eine nachlaufende Walze sowie eine Drillmaschine anordnen.

Der Antrieb der Eggenbalken 3 erfolgt über die an die Eingangswelle 7 der Getriebeeinheit 1 anschließbaren Gelenkwelle von der Zapfwelle einer landwirtschaftlichen Zug- oder Arbeitsmaschine.

Die Drehbewegung der Eingangswelle 7 wird durch den in der Getriebeeinheit 1 angeordneten Taumelkörpertrieb in eine schwingende Bewegung umgewandelt und auf die Schwingen 5 übertragen. Diese drehschwingende Bewegung versetzt die Eggenbalken in eine quer zur Fahrtrichtung der Maschine hin- und hergehende Bewegung. Durch diese hin- und hergehende Bewegung der Eggenbalken 3 wird der Boden durch die Zinken 4 bearbeitet.

Die Eggenbalken 3 sind als U-förmige Längsträger 8 ausgebildet, wobei sich die offene Seite 9 der Längsträger 8 jeweils auf der der Fahrtrichtung 10 abgewandten Seite befindet. An dem oberen Schenkel 11 der Längsträger 8 sind die Halterungen 12 der Schwingen 5 angeordnet, während an dem gegenüberliegenden unteren Schenkel 13 die Zinken 4 befestigt sind. Die U-förmigen Längsträger 8 sind jeweils über ihre ganze Länge auf ihrer Rückseite offen. Die Längsträger 8 sind aus Federstahl hergestellt und nach dem Einstanzen der Löcher für die Befestigung der Schwingenhalterungen 12 und der Zinken 4 gehärtet.

Durch Anbringung der Zinken 4 an die U-förmigen Längsträger 8 ist es möglich, daß die Zinken 4 beim Auftreffen auf beispielsweise Steine, diesen nach hinten etwas ausweichen können, da der untere Schenkel 13 elastisch verformt wird. Der Zinken 4 prallt also nicht mit voller Wucht auf den im Boden festsitzenden Stein auf. Ein Teil der Energie wird durch die Verformung des U-förmigen Längsträgers 8 aufgenommen und die Zinken 4 somit nicht beschädigt.

Die Zinken 4 weisen den Befestigungsteil 14 und den Arbeitsteil 15 auf. Der Befestigungsteil 14 des Zinkens 4 ist gegenüber dem Arbeitsteil 15 nach vorn abgewinkelt. Hierbei stützt sich ein Teil 16 des Befestigungselementes 17 auf den Eggenbalken 3 ab. Pro Zinken 4 sind zwei Befestigungselemente 17 vorgesehen, die quer zur Fahrtrichtung 10 gesehen in einem Abstand A zueinander angeordnet sind. Jedes Befestigungsteil 14 eines Zinkens 4 weist auf jeder Seite jeweils die Befestigungslasche 18 auf. In jeder Befestigungslasche 18 befindet sich eine Bohrung 19. In den Eggenbalken 3 befinden sich an dem schräg nach hinten-unten abgebogenen Teil 21 in einem Abstand zueinander jeweils im gleichen Abstand A angeordnete Bohrungen, durch welche die Schrauben 20 hindurchgesteckt und die Zinken 4 mit dem Eggenbalken 3 verschraubt werden. Die Zinken 4 weisen die Durchprägung 22 auf und sind aus Flachstahl geschmiedet. Der Arbeitsteil 15 der Zinken 4 verjüngt sich nach unten und weist im Querschnitt eine Winkelform mit einer Hohlkehle 23 auf, die in Fahrtrichtung 10 weist.

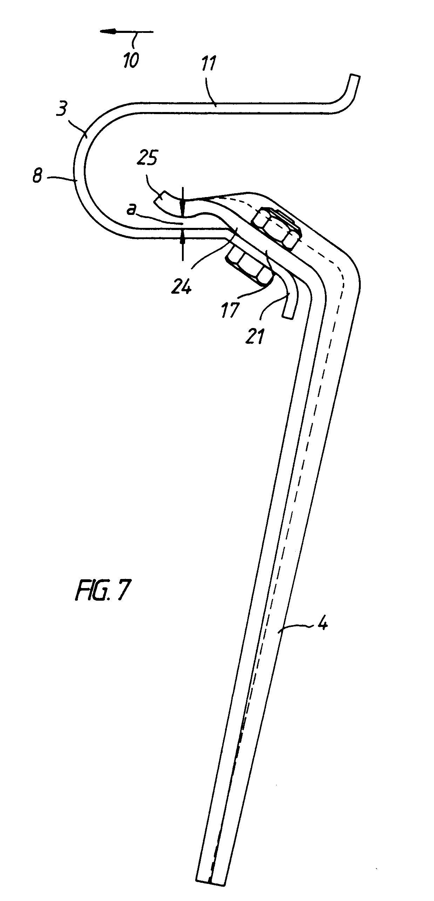

Die Zinke 4 gemäß Fig. 7 unterscheidet sich nur durch ein andersartig ausgebildetes Befestigungsteil 24 von dem vorab beschriebenen Zinken.

Hierbei weist der über die Befestigungselemente 17 hinausragende Abstützteil 25 in der gezeigten Ruhestellung des Zinkens 4 einen kleinen Abstand a zu dem Eggenbalken 3 auf. Hierdurch ergibt sich beim Auftreffen des Zinkens 4 auf ein im Boden festsitzendes Hindernis eine sog. "Stufenfederung".

Die Fig. 8 zeigt einen anders ausgebildeten Eggenbalken 2 , der einen Z-förmigen Längsträger 27 aufweist. Die Zinken 28 sind an dem schräg nach hinten-unten abgebogenen Teil 29 des Eggenbalkens 26 befestigt. Hierbei liegt der über die Befestigungselemente 17 hinausgehende Arbeitsteil 15 in der gezeigten Ruhestellung des Zinkens 28 an dem Eggenbalken 26 an.

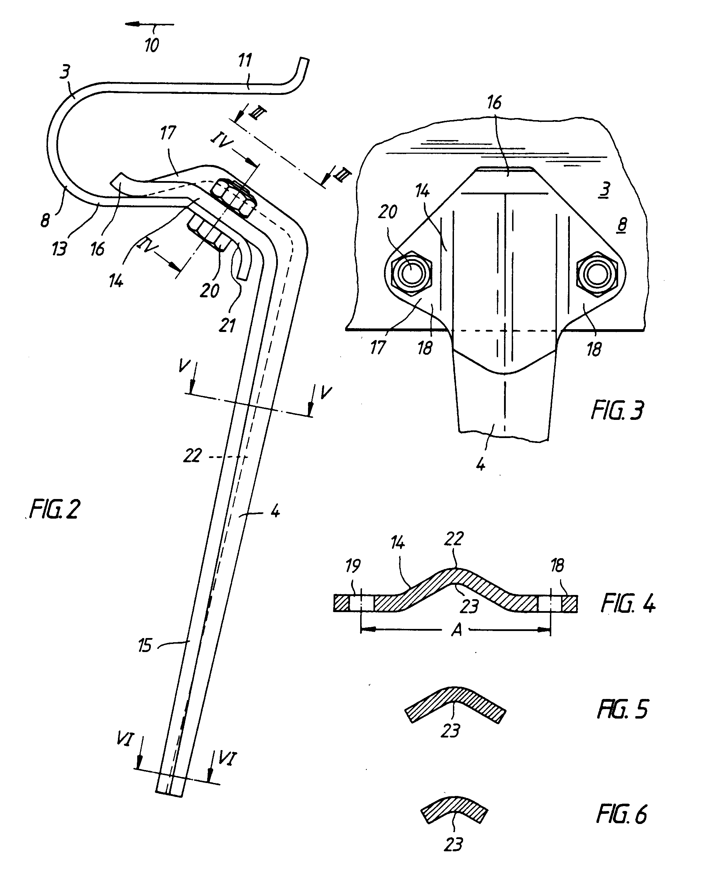

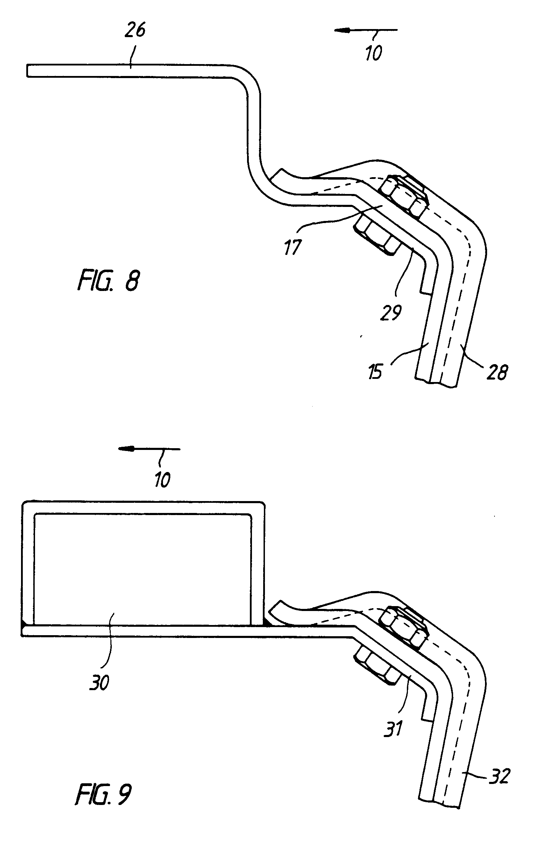

Die Fig. 9 zeigt einen kastenförmig ausgebildeten Eggenbalken 30, der ein über das Kastenprofil hinausreichendes schräg nach hinten-unten abgebogenes Teil 31 aufweist, an dem die Zinken 32 federnd befestigt sind. Auch hierbei liegt der Arbeitsteil 15 des Zinkens 32 in der gezeigten Ruhestellung des Zinkens 32 an dem schräg nach hinten-unten abgebogenen Teil 31 des Eggenbalkens 30 an. Die Befestigungselemente 17 der Zinken 28 und 32 sind identisch mit den Befestigungselementen 17 des in den Fig. 2 und 3 dargestellten Zinkens 4.

## Patentansprüche

1. Rüttelegge mit Zinken (4,28,32), die an hin- und herschwingenden Eggenbalken (3,26,30) mittels Befestigungselemente (17) befestigt sind und einen Befestigungs- und einen zum Boden weisenden Arbeitsteil aufweisen, wobei der Befestigungsteil (14,29) des Zinkens (4,28,32) gegenüber dem Arbeitsteil (15) nach vorn abgewinkelt ist, dadurch gekennzeichnet, daß der hintere untere Teil (21,29,31) des Eggenbalkens (3,26,30) , an dem die Zinken befestigt sind, schräg nach hinten-unten abgebogen ist, daß die Zinken (4,28,32) mit den Befestigungselementen (17) ausschließlich nur an dem schräg nach hinten-unten abgebogenen Teil (21,29,31) des Eggenbalkens (3,26,30) befestigt sind, und daß ein Teil (16,25) des Befestigungsteiles (14,24) frei über die Befestigungselemente (17) nach vorn zum Abstützen auf den nicht nach hinten-unten abgebogenen Teil des Eggenbalken (3,26,30) hinaufragt.

2. Rüttelegge nach Anspruch 1, dadurch gekennzeichnet, daß quer zur Fahrtrichtung (10) gesehen zwei in einem Abstand (A) zueinander angeordnete Befestigungselemente (17) für jeden Zinken (4,28,32) vorgesehen sind.

3. Rüttelegge nach Anspruch 1 und 2, dadurch gekennzeichnet, daß jedes Befestigungsteil (14,24) des Zinkens (4,28,32) auf jeder Seite jeweils eine Befestigungslasche (18) aufweist.

4. Rüttelegge nach Anspruch 1, dadurch gekennzeichnet, daß das über die Befestigungselemente (17) hinausragende Teil (16) des Befestigungsteiles (14) in Ruhestellung des Zinkens (28,32) an dem Eggenbalken (26,30) anliegt.

5. Rüttelegge nach Anspruch 1, dadurch gekennzeichnet, daß das über die Befestigungselemente (17) hinausragende Teil (25) des Befestigungsteiles (14) in Ruhestellung des Zinkens (4) einen kleinen Abstand (a) zu dem Eggenbalken (3) aufweist.

6. Rüttelegge nach Anspruch 1, dadurch gekennzeichnet, daß die Zinken (4,28,32) im Übergang von Arbeitsteil (15) zum Befestigungsteil (14,24) eine Durchprägung (22) aufweisen.

7. Rüttelegge nach Anspruch 1 oder 6, dadurch gekennzeichnet, daß die Zinken (4,28,32) aus Flachstahl geschmiedet sind.

8. Rüttelegge nach Anspruch 7, dadurch gekennzeichnet, daß der Arbeitsteil (15) des Zinkens (4,28,32) sich nach unten verjüngt und im Querschnitt eine Winkelform mit einer Hohlkehle (23) auf der Vorderseite aufweist.

## Claims

1. Reciprocating harrow with tines (4, 28, 32), which are mounted on reciprocatingly oscillatory harrow bars (3, 26, 30) by means of mounting elements (17) and have a mounting portion and a working portion, which is orientated towards the ground, the mounting portion (14, 29) of the tine (4, 28, 32) being bent forwardly relative to the working portion (15), characterised in that the rear, lower portion (21, 29, 31) of the harrow bar (3, 26, 30), on which the tines are mounted, is bent inclinedly rearwardly and downwardly, in that the tines (4, 28, 32) are mounted, by means of the mounting elements (17), exclusively only on the portion (21, 29, 31) of the harrow bar (3, 26, 30) which is bent inclinedly rearwardly and downwardly, and in that a portion (16, 25) of the mounting portion (14, 24) protrudes freely forwardly beyond the mounting elements (17) for support on the portion of the harrow bar (3, 26, 30) which is not bent rearwardly and downwardly.

2. Reciprocating harrow according to claim 1, characterised in that, when viewed transversely relative to the direction of travel (10), two mounting elements (17) are provided for each tine (4, 28, 32) and are disposed with a spacing (A) from each other.

3. Reciprocating harrow according to claims 1 and 2, characterised in that each mounting portion (14, 24) of the tine (4, 28, 32) has a respective mounting lug (18) on each side.

4. Reciprocating harrow according to claim 1, characterised in that the portion (16) of the mounting portion (14) protruding beyond the mounting elements (17) abuts against the harrow bar (26, 30) when the tine (28, 32) is in its position of rest.

5. Reciprocating harrow according to claim 1, characterised in that the portion (25) of the mounting portion (14) protruding beyond the mounting elements (17) has a small spacing (a) from the harrow bar (3) when the tine (4) is in its position of rest.

6. Reciprocating harrow according to claim 1, characterised in that the tines (4, 28, 32) have a raised portion (22) in the transitional region from the working portion (15) to the mounting portion (14, 24).

7. Reciprocating harrow according to claim 1 or 6, characterised in that the tines (4, 28, 32) are forged from flat steel.

8. Reciprocating harrow according to claim 7, characterised in that the working portion (15) of the tine (4, 28, 32) tapers downwardly and has an angular configuration, in cross-section, with a concave groove (23) on the front end.

**Revendications**

1. Herse alternative à dents (4, 28, 32) qui sont fixées à des poutres de herse (3, 26, 30) oscillantes de manière alternative par l'intermédiaire d'éléments de fixation (17) et comportant une partie de fixation et une partie utile ou partie de travail tournée vers le sol, la partie de fixation (14, 29) d'une dent (4, 28, 32) étant recourbée vers l'avant par rapport à la partie utile (15), herse caractérisée en ce que la partie inférieure arrière (21, 29, 31) de la poutre de herse (3, 26, 30) sur laquelle sont fixées les dents, est recourbée en biais vers l'arrière et vers le bas, les dents (4, 28, 32) étant fixées exclusivement sur la partie (21, 29, 31) de la poutre de herse (3, 26, 30) recourbée en biais vers l'arrière et vers le bas et en ce qu'une partie (16, 25) de la partie de fixation (14, 24) est en saillie librement au-delà des éléments de fixation (17) vers l'avant, pour l'appui de la partie de la poutre de herse (3, 26, 30) non recourbée vers l'arrière et vers le bas.

2. Herse alternative selon la revendication 1, caractérisée en ce que transversalement la direction de déplacement (10), elle comporte deux éléments de fixation (17) distants de la distance (A) pour chaque dent (4, 28, 32).

3. Herse alternative selon les revendications 1 et 2, caractérisée en ce que chaque partie de fixation (14, 24) des dents (4, 28, 32) présente de chaque côté une patte de fixation (18).

4. Herse alternative selon la revendication 1, caractérisée en ce que la partie (16) de la partie de fixation (14) qui dépasse des éléments de fixation (17) s'applique en position de repos des dents (28, 32) contre la poutre de herse (26, 30).

5. Herse alternative selon la revendication 1, caractérisée en ce que la partie (25) de la partie de fixation (14) qui dépasse des éléments de fixation (17) présente en position de repos de la dent (4), une faible distance (a) par rapport à la poutre de herse (3).

6. Herse alternative selon la revendication 1, caractérisée en ce que les dents (4, 28, 32) présentent une partie matricée (22) à la transition entre la partie utile (15) et la partie de fixation (14, 24).

7. Herse alternative selon la revendication 1 ou 6, caractérisée en ce que les dents (4, 28, 32) sont forgées en partant d'un acier plat.

8. Herse alternative selon la revendication 7, caractérisée en ce que la partie utile (15) d'une dent (4, 28, 32) se rétrécit vers le bas et présente en section une forme coudée avec une cavité (23) située du côté avant.

FIG. 1

FIG. 2

FIG. 3

FIG. 4

FIG. 5

FIG. 6

FIG. 7

26

10

FIG. 8

17

29

15

28

10

30

31

32

FIG. 9